# EUROPÄISCHE PATENTSCHRIFT

(11) **EP 2 167 303 B1**
(45) Veröffentlichungstag und Bekanntmachung des Hinweises auf die Patenterteilung: **12.01.2011**
(21) Anmeldenummer: 07787663.9
(22) Anmeldetag: 17.07.2007
(51) Int. Cl.: B29C 49/78, B29C 49/58, B29C 49/62

(54) **VENTILEINRICHTUNG FÜR HOHLKÖRPERBLASMASCHINEN UND VERFAHREN ZUM EINBLASEN VON DRUKLUFT IN EIN BLASVOLUMEN**
VALVE DEVICE FOR CAVITY BLOWING MACHINES AND METHOD FOR INJECTING COMPRESSED AIR INTO A BLOWING VOLUME
DISPOSITIF DE VANNES POUR MACHINE DE SOUFFLAGE ET PROCÉDÉ D'INJECTION D'AIR SOUS PRESSION DANS UNE CAVITÉ DE SOUFFLAGE

(43) Veröffentlichungstag der Anmeldung: 31.03.2010
(73) Patentinhaber: Eugen Seitz AG, 8623 Wetzikon (CH)
(72) Erfinder: RYMANN, Othmar, CH-8362 Balterswil (CH)
(74) Vertreter: EGLI-EUROPEAN PATENT ATTORNEYS
(86) Internationale Anmeldenummer: PCT/EP2007/057398
(87) Internationale Veröffentlichungsnummer: WO 2009/010096

(56) Entgegenhaltungen:
- EP-A- 0 655 313
- DE-A1- 3 111 925
- FR-A- 2 827 541

## Beschreibung

Die vorliegende Erfindung betrifft eine Ventileinrichtung nach dem Oberbegriff von Anspruch 1 sowie ein Verfahren nach dem Oberbegriff von Anspruch 11.

Eine solche Ventllenrichtung und ein solches Verfehren ist aus dem Dokument EP0655313 bekannt.

Für die Herstellung von Kunststoffflaschen, insbesondere von PET-Flaschen, wird ein Rohling oder Vorformling in einer Hohlkörperblasmaschine in einem Blaszylinder in der Regel in zwei Schritten in seine endgültige Form aufgeblasen. Hierfür weist der Rohling bereits im Wesentlichen den fertigen Flaschenkopf auf, welcher in der Blasform der Hohlkörperblasmaschine gehalten und mit einem Druckluftsystem verbunden wird. Durch Einblasen von Druckluft durch den Flaschenkopf wird der Rohling aufgeblasen und schliesslich in seine endgültige Form gebracht.

Der eigentliche Blasprozess wird damit in einem zweistufigen Verfahren ausgeführt, wobei zuerst ein Vorblasen mit einem Druckwert zwischen 2 bis 20 bar über ein Vorblasventil erfolgt, und danach das Fertigblasen, d.h. das endgültige Formen der Kunststoffflasche zu ihrer Endform, mit einem Druckwert zwischen 15 bis 40 bar über ein Hauptblasventil erfolgt. Diese beiden Ventile sind jeweils mit einer Druckquelle mit dem entsprechenden Druckpotential verbunden.

Anschliessend an diese beiden Blasstufen muss der Druck aus der Kunststoffflasche und aus den Zuführkanälen abgelassen werden, bevor die Kunststoffflasche von der mit dem Blaszylinder verbundenen Blasform entfernt werden kann. Dieser Prozessschritt wird auch als Entlüftung bezeichnet.

Diese Entlüftung erfolgt herkömmmlicherweise über ein Entlüftungsventil, welches mit dem Blaszylinder verbunden ist und in geöffneter Stellung die Druckluft in die Umgebung abgibt.

Da das Druckniveau und die Luftmenge für den Blasprozess mittels einer Druckerzeugungseinrichtung generiert werden müssen, bedeutet das Abblasen dieser Luftmenge in die Umgebung ein entsprechend grosser Energieverlust.

Es sind nun auch Vorrichtungen und Verfahren bekannt, um wenigstens einen Teil dieser Restluft wieder zurückzugewinnen und als Prozessluft einzusetzen.

Beispielsweise sind Ventileinrichtungen bekannt, bei welchen eine Teilrückgewinnung der Druckluft über ein separates Ventil, welches zwischen dem Blaszylinder und dem Entlüftungsventil angeordnet ist, realisiert wird. Dabei muss dieses zusätzliche Ventil allerdings separat angesteuert werden und bildet selbst wieder zusätzlichen Totraum, welcher gefüllt werden muss und dessen Restvolumen über das Entlüftungsventil in die Umgebung abgegeben werden muss.

In diesem Zusammenhang wird festgehalten, dass als Totraum die Leitungen und Räume zwischen den eigentlichen Ventilen und dem Blaszylinder inklusive der Kanäle im Blaszylinder selbst bezeichnet werden. Der gesamte Arbeitsraum besteht aus diesem Totraum zusammen mit dem Volumen des Hohlkörpers, dessen Inhalt am Schluss des Blasprozesses dem Umgebungsdruck angepasst werden muss. Als Füllvolumen wird die Menge Druckluft im Arbeitsraum bezeichnet.

Die Aufgabe der vorliegenden Erfindung bestand nun darin, eine Ventileinrichtung zu finden, welche mit möglichst wenig aktiven Komponenten einen effizienten und schnellen Blas- und Entlüftungsvorgang ermöglicht.

Diese Aufgabe wird erfindungsgemäss durch eine Ventileinrichtung mit den Merkmalen nach Anspruch 1 gelöst. Weitere, erfindungsgemässe Ausführungsformen ergeben sich aus den Merkmalen der weiteren Ansprüche 2 bis 10.

Die erfindungsgemässe Ausführung betrifft eine Ventileinrichtung für Hohlkörperblasmaschinen zum Einblasen von Druckluft in ein Blasvolumen eines Vorformlings, mit einer ersten Druckspeisung und einer zweiten Druckspeisung, wobei die erste Druckspeisung ein tieferes Druckniveau aufweist als die zweite Druckspeisung, und mit über Ventile absperrbare Zu- und Ableitungen zum Blasvolumen. Erfindungsgemäss weist die Ventileinrichtung drei Umschaltventile auf, ein erstes Umschaltventil mit zwei Eingängen und einem Ausgang auf, wobei der erste Eingang mit der ersten Druckspeisung und der zweite Eingang mit der zweiten Druckspeisung verbunden ist und der Ausgang mit einem ersten Eingang eines zweiten Umschaltventils verbunden ist, dessen Ausgang mit dem Blasvolumen in Verbindung steht, und ein zweiter Eingang des zweiten Umschaltventils mit dem Ausgang eines dritten Umschaltventils in Verbindung steht, dessen erster Eingang mit der Umgebung und dessen zweiter Eingang mit einem Druckrückführungssystem verbunden ist, wobei die Umschaltventile einen als Hohlkörper ausgebildeten Ventilkolben aufweisen, dessen Hohlraum permanent offen mit dem Ausgang des jeweiligen Umschaltventils verbunden ist. Mit dieser Anordnung lassen sich mit einer auf drei Ventile reduzierten Ventileinrichtung alle notwendigen Prozessschritte des Blasvorganges einfach steuern, d.h. der Vorblasprozess, der Hauptblasprozess, der Sparprozess und der Entlüftungsprozess.

Als Umschaltventil wird hier ein Ventil bezeichnet, welches insgesamt drei Anschlüsse bei zwei möglichen Ventil- resp. Schaltstellungen aufweist, ein solches Ventil wird in der Fachwelt auch als 3/2-Wegventil bezeichnet. Im vorliegenden Fall werden alternativ der erste Eingang oder der zweite Eingang jeweils mit dem Ausgang verbunden; d.h. es wird in der Funktion als Weiche eingesetzt. Es ist hier klar festzuhalten, dass die Bezeichnung Eingang und Ausgang nicht die Fliessrichtung des durch das Ventil zu steuernden Mediums angibt, d.h. es ist ein Durchfliessen sowohl von Eingang zu Ausgang wie auch von Ausgang zu Eingang möglich.

Beispielsweise ist der Ventilkolben der Umschaltventile als im jeweiligen Ventilkörper längsverschiebbarer zylindrischer Kolben ausgebildet, welcher einen radial nach Aussen abragenden, zwischen den beiden Stirnflächen des Kolbens angeordneten Kolbenring aufweist, dessen beide Stirnflächen jeweils in einer ersten Steuerkammer und einer zweiten Steuerkammer liegen. Damit lassen sich schnell agierende, d.h. schnell von einer Schaltposition in die andere Schaltposition steuerbare Umschaltventile realisieren, die sowohl die hohen Druckwerte der Blasluft auf den beiden Stufen verarbeiten können wie auch das Steuern der verbrauchten Luft im Entlüftungsprozess bis auf praktisch Umgebungsdruck hinunter. Weiter erlaubt diese Ausbildung des Kolbens eine sehr kompakte und platzsparende Bauweise und dank der aussenliegenden Steuerkammern mit verhältnismässig grossen Steuerflächen verhältnismässig kleine Steuerdrücke für die Steuerung des Kolbens und damit des Ventils an sich. Durch die Anordnung und Dimensionierung der Wirkflächen des Kolbens wird dieser durch den Arbeitsdruck im Ventil selbst bei seiner Bewegung unterstützt, was zu sehr schnellen Öffnung resp. Schliesszeiten führt.

Beispielsweise ist eine erste Wirkfläche des Kolbenringes in der ersten Steuerkammer kleiner als eine zweite Wirkfläche des Kolbenringes in der zweiten Steuerkammer. Das Verhältnis der Wirkflächen wird vorteilhaft derart gewählt, dass ein Verhältnis von ca. 80% erreicht wird, d.h. dass die Wirkfläche in der einen Steuerkammer nur ca. 80% der Wirkfläche in der anderen Steuerkammer des Kolbenringes beträgt.

Beispielsweise steht die erste Steuerkammer über eine erste Steuerdruckleitung mit einem Steuerdruckreservoir in Verbindung und steht die zweite Steuerkammer über ein Steuerventil schaltbar entweder mit der Umgebung oder mit dem Steuerdruckreservoir in Verbindung. Beispielsweise ist das Steuerventil als sogenanntes 3/2-Ventil ausgelegt, d.h. es weist drei Anschlüsse bei zwei Schaltzuständen auf. Vorteilhaft kann hier ein einfach aufgebautes und mit einem niedrigen Steuerdruckniveau zu betreibendes Ventil eingesetzt werden, welches dank kleinen Dimensionen auch platzsparend ausgeführt werden kann.

Beispielsweise ist an beiden Stirnseiten der Kolben jeweils eine ringförmige axial ausgerichtete Ventildichtung angeordnet, deren Stirnfläche die jeweilige Schliessfläche des Kolbens bildet und in geschlossenem Zustand des Kolbens gegen eine Sitzfläche des entsprechenden Ventilraumes in Anschlag steht und es ist weiter in geschlossenem Zustand eine gegen die Schliessrichtung wirkende Wirkfläche gebildet, wobei die geometrischen Abmessungen der beiden Ventildichtungen identisch sind. Durch diesen Aufbau kann eine einfache Steuerung des Kolbens über die beiden Steuerkammern des Kolbenringes erfolgen, wobei die Steuerkräfte verhältnismässig klein ausfallen können und damit ein herkömmliches, einfaches Steuerventil eingesetzt werden kann. Da die entsprechenden Steuerflächen radial vom Kolben nach Aussen abragend angeordnet sind, weisen sie einerseits kompakte Abmessungen bei trotzdem grossen Wirkflächen auf. Durch die Dimensionierung der Wirkflächen des Kolbens wird dieser durch den Arbeitsdruck selbst beim Öffnen unterstützt, was zu sehr schnellen Öffnung resp. Schliesszeiten führt.

Beispielsweise weisen die Ventildichtungen des Kolbens als Schliesskante einen runden Flansch mit im Wesentlichen gerader Schliessfläche auf, wobei die Schliessfläche vorzugsweise senkrecht zur Schliessrichtung des Hohlkolbens ausgerichtet ist. Damit wird eine gute Dichtwirkung bei grossem Öffnungsquerschnitt erreicht. Die Schliessfläche beträgt dabei vorteilhaft zwischen 5% - 25% der Wirkfläche der entsprechenden Stirnseite des Kolbens. Beim Öffnen des Ventils, d.h. beim Abheben des Kolbens resp. der Ventildichtung von ihrem Sitz wird das Ventil praktisch unmittelbar vollständig druckkompensiert, da die beiden Wirkflächen der beiden Stirnseiten des Kolbens nun praktisch gleich gross sind, wodurch die Bewegungskraft für den Kolben sinkt und damit eine hohe Kolbengeschwindigkeit d.h. Öffnungsgeschwindigkeit des Ventils erzielt wird.

Beispielsweise ist dabei die Aussenfläche des Flansches zur Schliessfläche hin radial nach innen angeschrägt ausgeführt. Das bedeutet, dass der Flansch in Richtung der Schliessfläche angefast ist. Damit wird eine Wirkfläche geschaffen, die durch den im entsprechenden äusseren Ventilraum herrschenden Druck ein in Öffnungsrichtung gerichtete Kraft auf den Kolben ausüben kann. Damit kann beispielsweise eine Überdruck-Notöffnung realisiert werden, die den Kolben anhebt, wenn das Druckniveau resp. die Druckdifferenz in Bezug auf den Druck im inneren Ventilraum resp. im Kanal des Kolbens einen bestimmten Wert überschreitet.

Beispielsweise sind der Kolben und die Ventildichtung zweiteilig aus unterschiedlichen Materialien ausgebildet, wobei die Ventildichtung vorzugsweise aus Kunststoff besteht. Damit kann der Kolben beispielsweise aus Metall mit verhältnismässig geringen Wandstärken gefertigt sein und die Ventildichtung kann einfach auf entsprechende ausgebildete Stirnflächen des Kolbens aufgesteckt und damit verbunden werden. Zudem weist damit die Ventildichtung vorteilhaft sehr gute Dämpfungseigenschaften beim Schliessen des Kolbens in seinen jeweiligen Ventilsitz auf.

Beispielsweise sind beide Eingänge des ersten Umschaltventils direkt ohne Rückschlagventil mit der ersten resp. der zweiten Druckspeisung verbunden. Durch die schnelle Umschaltzeit des Kolbens wird praktisch keine resp. nur eine äusserst geringe Überlappung der beiden Eingänge verursacht, d.h. die direkte Verbindung zwischen den beiden Eingängen ist derart kurz, dass sie in der Regel vernachlässigt werden kann. Vorteilhaft ist der Ausgang des ersten Umschaltventils im Bereich der Ventildichtung des Eingangs der höheren Druckquelle angeordnet, so dass der höhere Druck zuerst den Hohlraum des Ventilkolbens durchlaufen muss, bevor er zum ersten Eingang mit der niedrigeren Druckquelle gelangt.

Beispielsweise ist durch den Ventilkolben des zweiten Umschaltventils hindurch eine Reckstange der Hohlkörperblasmaschine, koaxial oder annähernd senkrecht zur Längsachse des Ventilkolbens verlaufend und den Hohlraum des Ventilkolbens durchdringend, angeordnet. Damit lässt sich das zweite Umschaltventil besonders platzsparend unmittelbar im Blaskopf der Hohlkörperblasmaschine im Bereich des Vorformlings anordnen, was auch zu sehr kurzen Strömungskanälen für die Blasluft und damit entsprechend kleinen Verlusten führt.

Die Aufgabe wird weiter erfindungsgemäss durch ein Verfahren mit den Merkmalen nach Anspruch 11 gelöst. Weitere, erfindungsgemässe Ausführungsformen des Verfahrens ergeben sich aus den Merkmalen der weiteren Ansprüche 12 bis 14.

Beim vorliegenden Verfahren zum Einblasen von Druckluft in ein Blasvolumen eines Vorformlings unter Verwendung von Druckluft, welche in zwei unterschiedlichen Druckniveaus bereitgestellt wird, wobei das Blasvolumen zuerst mit dem ersten, tieferen Druckniveau und danach mit dem zweiten, höheren Druckniveau gesteuert über Ventile beaufschlagt wird und nach abgeschlossenem Blasvorgang der im Blasvolumen befindliche Druck gesteuert über ein Entlüftungsventil in die Umgebung abgeführt wird, wird erfindungsgemäss die Zufuhr der Druckluft der beiden unterschiedlichen Druckniveaus über ein erstes Umschaltventil gesteuert. Weiter wird die Druckluftzufuhr zum Blasvolumen und Abführung nach abgeschlossenem Blasvorgang aus dem Blasvolumen über ein zweites Umschaltventil gesteuert und die vom zweiten Umschaltventil abgeführte verbrauchte Luft über ein drittes Umschaltventil gesteuert an die Umgebung oder in ein Druckrückführungssystem zugeführt. Dabei wird vor Beginn des Blasvorganges die Ventileinrichtung entlüftet geschaltet, d.h. das zweite Umschaltventil und das dritte Umschaltventil miteinander verbunden und das dritte Umschaltventil mit der Umgebung sowie das erste Umschaltventil mit dem tieferen Druckniveau verbunden geschaltet. In dieser Stellung der Ventileinrichtung ist das Blasvolumen druckfrei und somit kann beispielsweise ein neuer Vorformling in die Blasstation eingebracht und mit der Ventileinrichtung verbunden werden resp. ein fertig geblasener Hohlkörper aus der Blasstation entfernt werden, da diese in dieser Stellung druckfrei ist. Für den Start des Blasvorganges wird nun das zweite Umschaltventil mit dem ersten Umschaltventil verbindend geschaltet, womit der Vorblasdruck in das Blasvolumen eingeblasen wird. Nach Ablauf einer vordefinierten resp. eingestellten Vorblaszeit wird das erste Umschaltventil mit dem höheren Druckniveau verbindend umgeschaltet, d.h. nun wird das Blasvolumen mit dem zweiten, höheren Druck, dem Hauptblasdruck, beaufschlagt. Nach Ablauf einer vordefinierten resp. eingestellten Hauptblaszeit wird das zweite Umschaltventil mit dem dritten Umschaltventil verbindend umgeschaltet. Damit hat der Vorformling nun seine endgültige Form erreicht und die Zufuhr des Hauptblasdruckes zum Blasvolumen kann unterbrochen werden. Nach dem Umschalten des zweiten Umschaltventils kann nun das erste Umschaltventil mit dem tieferen Druckniveau verbinden zurückgeschaltet werden. Der Teil des in den Leitungen der Ventileinrichtung verbleibenden hohen Druckanteils wird in der Regel problemlos im unteren Druckniveau aufgenommen, da es sich um äusserst kleine Volumen handelt. Selbstverständlich kann im ersten Eingang zum ersten Umschaltventil aber auch ein Rückschlagventil angeordnet werden, so dass keine hohen Druckstösse in das Vorblassystem gelangen können. Nach Ablauf einer vordefinierten resp. eingestellten Rekuperationszeit wird das dritte Umschaltventil mit der Umgebung verbindend geschaltet, womit die Ventileinrichtung entlüftet geschaltet ist. Vor diesem Umschalten des dritten Umschaltventils gelangt der gebrauchte Druck in das Druckrückführungssystem, womit dieser Druckluftanteil nicht verloren geht sondern wieder für den Blasprozess oder für andere Prozesse verwendet werden kann. Nur der noch verbleibende Druckanteil wird schliesslich an die Umgebung abgegeben.

Es hat sich gezeigt, dass damit Einsparungen in der Bereitstellung der Druckluft von bis zu 10% - 25% realisiert werden können. Es ist für den Fachmann klar, dass die Vorblaszeit und Hauptblaszeit entsprechend den Materialeigenschaften des Hohlkörpers sowie dessen Formgebung gewählt resp. eingestellt werden, um in möglichst kurzer Produktionszeit eine optimale Formgebung und definierte Materialeigenschaften erzielt werden.

Beispielsweise wird das erste Druckniveau auf einen Druck zwischen 4 bis 20 bar eingestellt resp. geregelt, d.h. ein Vorblasdruck in dieser Grösse bereitgestellt.

Beispielsweise wird das zweite Druckniveau auf einen Druck zwischen 15 bis 40 bar eingestellt resp. geregelt, d.h. ein Hauptblasdruck in dieser Grösse bereitgestellt, beispielsweise durch eine mehrstufige Kompressoranlage.

Beispielsweise wird die Rekuperationszeit durch Messung des Druckes im Blaszylinder und Erreichen resp. Unterschreiten eines bestimmten Druckwertes dynamisch bestimmt. Das heisst, dass in Abhängigkeit des Verlaufes des Druckabbaus des Füllvolumens das Entlüftungsventil beim Erreichen resp. Unterschreiten eines bestimmten Druck-Grenzwertes geöffnet wird.

Ausführungsbeispiele der vorliegenden Erfindung werden nachstehend anhand von Figuren noch näher erläutert. Es zeigen
Fig. 1 schematisch den Längsschnitt durch eine erfindungsgemässe Ventileinrichtung für das Blasen von Kunststoffflaschen, mit den Ventilen geschaltet in der entlüfteten Ausgangsstellung A;
Fig. 2 schematisch den detaillierteren Längsschnitt durch ein erfindungsgemäss ausgestaltetes Umschaltventil;
Fig. 3 schematisch den Druckverlauf innerhalb des Blasvolumens über den gesamten Blasprozess einer erfindungsgemässen Ventileinrichtung;
Fig. 4 den Längsschnitt nach Figur 1 mit den Ventilstellungen in der Vorblasphase;
Fig. 5 den Längsschnitt nach Figur 1 mit den Ventilstellungen in der Hauptblasphase H;
Fig. 6 den Längsschnitt nach Figur 1 mit den Ventilstellungen in der Rekuperationsphase R;
Fig. 7 den Längsschnitt nach Figur 1 mit den Ventilstellungen in der Entlüftungsphase E;
Fig. 8 schematisch den Längsschnitt durch eine alternative erfindungsgemässe Ventileinrichtung für das Blasen von Kunststoffflaschen, mit den Ventilen geschaltet in der entlüfteten Ausgangsstellung A;
Fig. 9 den Längsschnitt nach Figur 8 mit den Ventilstellungen in der Vorblasphase V;
Fig. 10 den Längsschnitt nach Figur 8 mit den Ventilstellungen in der Hauptblasphase H;
Fig. 11 den Längsschnitt nach Figur 8 mit den Ventilstellungen in der Rekuperationsphase R;
Fig. 12 den Längsschnitt nach Figur 8 mit den Ventilstellungen in der Entlüftungsphase E.

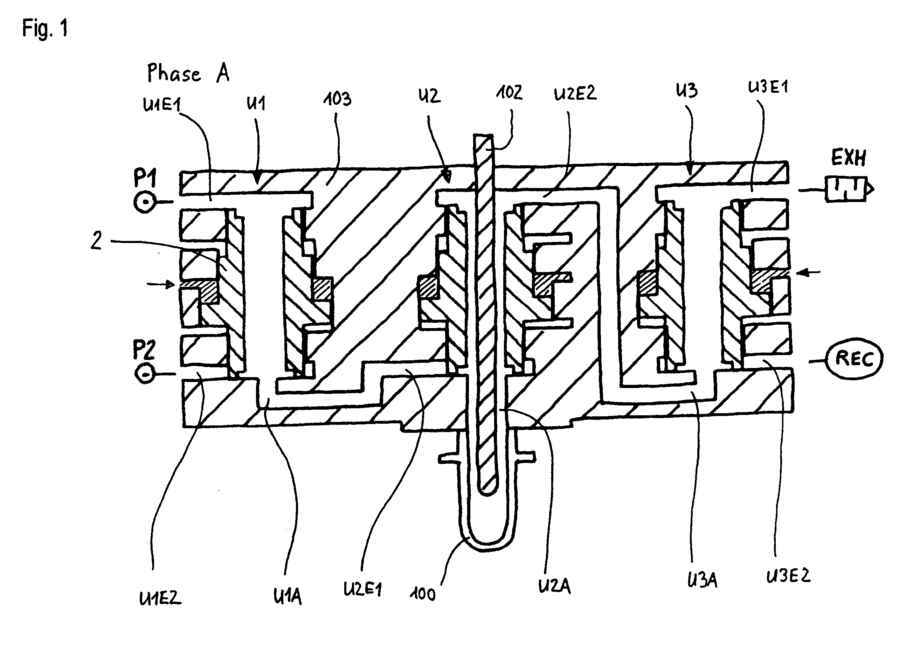

Aus Figur 1 ist in rein schematischer Darstellung der grundsätzliche Aufbau einer Ausführungsform einer erfindungsgemässen Ventileinrichtung ersichtlich.

Ein beispielsweise aus Kunststoff herzustellender Hohlkörper, beispielsweise eine PET-Flasche, wird ausgehend von einem Rohling, der in einem Blaszylinder 100 eingebracht ist, durch Einblasen von Druckluft und strecken mittels eines in das Innere des Rohlings eingeführten Streckdorns oder Reckstange 102 in bekannter Weise zu seiner gewünschten Form aufgeblasen resp. geformt.

Für die Versorgung des Blaszylinders 100 mit der für diesen Prozess notwendigen Druckluft wird eine erfindungsgemässe Ventileinrichtung 103 verwendet, welche den Vorblasdruck aus einer Druckquelle P1 und den eigentlichen Arbeits- oder Hauptblasdruck aus einer Druckquelle P2 auf dem jeweiligen Druckniveau für eine jeweils einstellbare Zeitdauer zur Verfügung stellt. Insbesondere die Grösse und Dauer des Vorblasdrucks ist für den Blasprozess sehr wichtig, da hierdurch eine korrekte Materialverteilung des im Blaszylinder angeordneten Rohlings erfolgt.

Für die entsprechend Zu- resp. Abführung der Arbeitsluft sind hierfür in der Ventileinrichtung 103 drei Umschaltventile U1, U2, U3 angeordnet.

Das erste Umschaltventil U1 dient der Umschaltung der Druckquelle, d.h. der Umschaltung von der Druckquelle P1 als Vorblasdruck auf die Druckquelle P2 als Hauptblasdruck. Dabei sind der erste Eingang U1E1 des ersten Umschaltventils U1 mit der Druckquelle P1 und der zweite Eingang U1E2 mit der Druckquelle P2 verbunden. In der dargestellten unteren Position des ersten Umschaltventils U1 ist der erste Eingang U1E1 mit dem Ausgang U1A verbunden. Diese Position wird in der vorliegenden Beschreibung als Ruheposition oder geschlossenen Stellung bezeichnet.

Das Umschaltventil U1 ist damit als 3/2-Weg Ventil oder Weichenventil ausgebildet, d.h. es sind bei insgesamt drei Ein- resp. Ausgängen zwei Schaltzustände möglich, nämlich entweder der erste Eingang U1E1 mit dem Ausgang U1A (als geschlossene Stellung) oder der zweite Eingang U1E2 mit dem Ausgang U1A verbunden (als offene Stellung). Dabei beziehen sich die Bezeichnungen Eingang und Ausgang nicht auf die Durchflussrichtung des Mediums sondern lediglich auf den Schalt- resp. Verbindungszustand des Ventils.

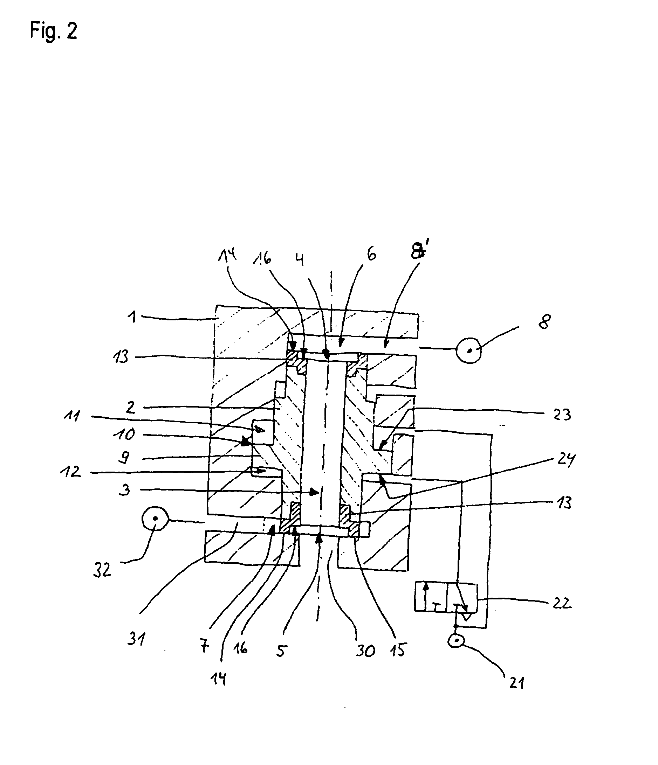

Der Aufbau des Umschaltventils U1, wie grundsätzlich auch der beiden weiteren Umschaltventile U2 und U3, wird nachfolgend anhand von Figur 2 näher beschrieben. Im Gehäuse 1 ist längsverschiebbar ein Kolben 2, als Ringkolben mit einem mittig angeordneten, zwischen den beiden Stirnseiten 4 resp. 5 des Kolbens 2 durchgehenden Kanal 3, ausgebildet.

Die obere Stirnseite 4 des Kolbens 2 mündet in einen ersten Ventilraum 6 der ebenfalls im Gehäuse 1 ausgebildet ist und über eine Druckleitung 8' als Eingang mit einer externen Druckquelle 8 verbunden ist. Diese Druckquelle 8 ist beispielsweise auf dem ersten Druckniveau P1.

Die untere Stirnseite 5 des Kolbens 2 mündet in einen zweiten Ventilraum 7, in welchem beispielsweise zentral der Ausgangskanal 30 angeordnet ist der den Ausgang U1A des Umschaltventils U1 bildet.

Der Ventilraum 7 ist seitlich über eine Druckleitung 31 als zweiter Eingang U1E2 mit einer weiteren Druckquelle 32 verbunden, die beispielsweise auf dem zweiten Druckniveau P2 eingestellt ist.

Weiter weist der Kolben 2 im seinem mittleren Bereich einen radial nach Aussen abstehenden Kolbenring 9 auf, der in einen Ringraum 10 des Gehäuses 1 mündet und diesen Ringraum 10 in zwei Steuerkammern untereilt, einer ersten oberen Steuerkammer 11 und einer zweiten unteren Steuerkammer 12.

An der Aussenseite des Kolbens 2 resp. der Innenwand der entsprechenden Kolbenöffnung des Gehäuses 1 sind mehrere Dichtungsringe oder Dichtungspackungen (in der Figur der Übersichtlichkeit halber nicht dargestellt) angeordnet, um die Ventilräume 6 resp. 7 gegeneinander resp. gegen die Steuerkammern 11 resp. 12 abzudichten.

Der Kolben 2 ist vorteilhaft in der Form als Ringkolben derart ausgebildet, dass der Kanal 3 einen möglichst grossen Durchmesser aufweist und dass der Querschnitt des Kanals 3 zwischen den beiden Stirnflächen 4 resp. 5 konstant ist und geradlinig, vorteilhaft koaxial zur Längsachse des Kolbens 2 verläuft.

Weiter ist an der oberen Stirnfläche 4 und der unteren Stirnfläche 5 des Kolbens 2 jeweils eine Ventildichtung 13 angeordnet. Diese Ventildichtungen 13 weisen an ihrer Stirnseite jeweils eine Schliessfläche 14 auf, die in jeweils geschlossenem Zustand des Kolbens 2 gegen eine entsprechend ausgebildete Sitzfläche 15 am Boden des jeweiligen Ventilraumes 6 resp. 7 in dichtendem Anschlag stehen. In der dargestellten geschlossenen Position des Ventils ist der Kolben 2 an seinem unteren Anschlag, d.h. die Ventildichtung der Stirnfläche 5 steht gegen die Sitzfläche 15 am Boden des unteren Ventilraumes 7 in Anschlag und dichtet somit den Kanal 3 und damit auch den Ausgangskanal 30 gegen die untere Druckleitung 31 ab. Hingegen ist der Ausgangskanal 30 über den Kanal 3 mit dem oberen Ventilraum 6 und damit der Druckleitung 8' verbunden und weist damit das Druckniveau P1 auf.

Die Ventildichtung 13 weist nun weiter eine Wirkfläche 16 auf, d.h. eine zwischen der Innenwand der Schliessfläche 14 und der Innenwand des Kanals 3 angeordnete Fläche, die kleiner ist, als die gesamte Wirkfläche der oberen Ventildichtung 13 der Stirnseite 4 des Kolbens 2, die sich aus der Wirkfläche 16 und der Schliessfläche 14 zusammensetzt. Damit wird der Kolben 2 durch die Differenz zwischen den beiden Stirnseiten 4 resp. 5 durch die Druckkraft des im ersten Ventilraum 6 und damit auch im Kanal 3 herrschenden Druckes nach unten gedrückt und in der Schliesslage gehalten.

Es ist für den Fachmann klar, dass diese Ruhestellung beispielsweise durch Anordnung einer in Schliessrichtung wirkenden Feder unterstützt werden kann, so dass das Ventil auch in drucklosem Zustand zuverlässig in der geschlossenen Stellung verbleibt.

Die Ventildichtung 13 ist vorteilhaft aus einem verschleissarmen, möglichst starren Material gefertigt und als separates Teil am Kolben 2 angeordnet.

Als Material kommt beispielsweise ein hochfester und möglichst temperaturbeständiger Kunststoff in Frage, der als weiterer Vorteil eine Dämpfung bei einer raschen Schliessbewegung des Kolbens 2 aufweist und damit einerseits eine hohe Schliessgeschwindigkeit erlaubt und andererseits eine hohe Verschleissfestigkeit aufweist.

Alternativ kann die Ventildichtung 13 auch als integrierter Bestandteil direkt an der unteren Stirnfläche 5 des Kolbens 2 ausgebildet sein.

Es ist für den Fachmann klar, dass das Gehäuse 1 entsprechend der Form und dem Aufbau des Kolbens 2 einteilig oder mehrteilig ausgeführt sein kann, lediglich der Einfachheit halber wird das Gehäuse 1 in den Figuren als einteilig dargestellt.

Für die Ansteuerung des Kolbens 2 sind die beiden Steuerkammern 11 und 12 mit einer Steuerdruckquelle 21 verbunden. So ist beispielsweise die obere Steuerkammer 11 direkt mit der Steuerdruckquelle 21 verbunden und die untere Steuerkammer 12 über ein Steuerventil 22 mit der Steuerdruckquelle 21 verbunden. In der geschlossenen Stellung des Ventils ist das Steuerventil 22 geschlossen und derart ausgelegt, dass in dieser geschlossenen Stellung die untere Steuerkammer 12 mit der Umgebung kommunizierend verbunden ist, d.h. entlüftet ist. Damit steht die obere Steuerkammer 11 unter Druck und die untere Steuerkammer 12 ist entlüftet, was den Kolben 2 durch den Druck in der Steuerkammer 11 über die erste Wirkfläche 23 in seiner geschlossenen Stellung hält.

Die erste Wirkfläche 23 ist dabei geometrisch kleiner als die zweite Wirkfläche 24 des Kolbenringes 9 in der unteren Steuerkammer 12.

Wenn nun das Steuerventil 22 geöffnet wird, wird die untere Steuerkammer 12 ebenfalls mit der Steuerdruckquelle 21 verbunden, wodurch sich eine Differenzkraft zwischen der Steuerkammer 12 und 11 mit Wirkung nach oben einstellt. Wenn diese Differenzkraft nun die Haltekraft des Kolbens durch den Anpressdruck der Differenz der Wirkflächen der Stirnseiten 4 und 5 des Kolbens 2 überwindet, löst sich der Kolben 2 resp. die Schliessfläche 14 von der Sitzfläche 15 im unteren Ventilraum 7 und der Kolben 2 wird nach oben bewegt. Durch die geometrische Auslegung der Stirnflächen 4 und 5 des Kolbens 2 resp. der entsprechenden Wirkflächen sind nun unmittelbar nach dem Abheben der unteren Ventildichtung 13 gleich grosse Wirkflächen gebildet. Damit wird lediglich ein kleiner Kraftaufwand für eine schnelle, vollständige Öffnung des Ventils, d.h. vollständige Bewegung des Kolbens 2 in seine obere Endlage, wie in Figur 2 dargestellt, benötigt.

In dieser offenen Stellung ist der Ausgangskanal 30 über den unteren Ventilraum 7 mit der Druckleitung 31 und damit der Druckquelle 32 auf dem Druckniveau P2 verbunden. Somit arbeitet das Ventil als Umschaltventil zwischen den beiden Druckniveaus P1 und P2. Durch die sehr schnellen Schaltzeiten des Ventils, d.h. der schnellen Bewegung des Kolbens 2 zwischen seinen zwei Positionen, kann in den Druckleitungen 31 rep. 8' in der Regel auf die Anordnung von Rückschlagventilen verzichtet werden. Weiter weist der Kolben 2 sehr gute Dämpfungseigenschaften auf, da er an seinen beiden Stirnseiten 4 resp. 5 über die Ventildichtungen 13 sehr gut abgefedert ist.

Durch die aussenliegende Anordnung der Wirkflächen 23 resp. 24 des Kolbenringes 9 und des möglichen grossen Querschnittes des Kanals 3 des Kolbens 2 kann daher die Steuerung des Kolbens 2 mit verhältnismässig kleinem Steuerdruckniveau erfolgen. Dies wiederum erlaubt den Einsatz von kleinen und damit kostengünstigen Steuerventilen 22 für die Ansteuerung von schnellschliessenden Ventilen mit Druckquellen 8 resp. 32 mit hohem Druckniveau.

Ein weiterer Vorteil dieser Ventilanordnung besteht darin, dass für eine zuverlässige Funktion des Umschaltventils, d.h. für das Öffnen und Schliessen des Kolbens 2, kein Arbeitsdruck seitens der externen Druckquellen 8 resp. 32 notwendig ist, d.h. das Ventil arbeitet selbst mit einem sehr kleinen Steuerdruckniveau. Da keine Druckdifferenz zwischen dem ersten Ventilraum 6 und dem zweiten Ventilraum 7 notwendig ist, kann das Ventil auch gesteuert werden, wenn die beiden Ventilräume 6 und 7 praktisch ohne Druck sind oder dasselbe Druckniveau aufweisen.

Die erfindungsgemässe Ventileinrichtung nach Figur 1 weist im Speisebereich das erste Umschaltventil U1 auf, wobei der Ausgang U1A im Bereich des Ventilraums des zweiten Eingangs U1E2 angeordnet ist, welcher mit der Druckquelle P2 verbunden ist. Damit werden insbesondere für den Hauptblasprozess kurze Verbindungsstrecken realisiert, was zu kleinen Verlusten und damit hoher Effizient führt.

Das zweite Umschaltventil U2 ist unmittelbar im Bereich des Blaszylinders 100 angeordnet, wobei der Ausgang U2A direkt in das Blasvolumen des Blaszylinders 100 mündet. Dabei ist der Ausgang U2A vorteilhaft im Bereich des Ventilraumes des ersten Einganges U2E1 angeordnet, der mit dem Ausgang U1A des ersten Umschaltventils U1 verbunden ist. Die für den Herstellungsprozess des Hohlkörpers notwendige Reckstange 102 ist koaxial zum Kolben 2 des Umschaltventils U2 geführt. Der zweite Eingang U2E2 dient als Entlüftungsauslass und ist mit dem Ausgang U3A des dritten Umschaltventils U3 verbunden.

Der erste Eingang U3E1 des dritten Umschaltventils U3 ist mit der Umgebung EXH, beispielsweise über einen Schalldämpfer, verbunden, während der zweite Eingang U3E2 mit einem Druckrückführungssystem REC verbunden ist. In das Druckrückführungssystem REC wird die gebrauchte Druckluft auf hohem Druckniveau nach dem Blasprozess als Sparprozess rekuperiert, bevor die Restluft an die Umgebung abgegeben wird. Beim dritten Umschaltventil U3 ist der Ausgang U3A im Bereich des Ventilraums des zweiten Eingangs U3E2 angeordnet, wodurch der Sparprozess durch kurze Verbindungswege ebenfalls sehr effizient durchgeführt werden kann.

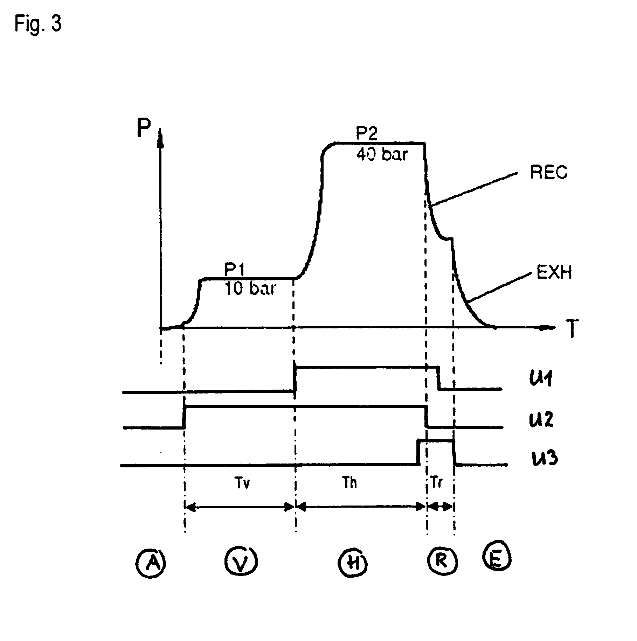

Durch diese Ventilanordnung lässt sich die in Figur 3 dargestellte Blaskurve für den gesamten Blasprozess eines einzelnen Hohlkörpers realisieren. Unterhalb der Druckkurve entlang der Zeitachse T sind die Ventilbewegungen der drei Umschaltventile U1, U2 und U3 dargestellt, wobei die jeweilige Kurve die Position des Kolbens unten resp. oben entsprechend der Darstellung von Figur 1 zeigt. Wie bereits festgehalten, stellt jeweils die untere Position des Kolbens die Ruhestellung oder geschlossene Stellung dar und die obere Position die geöffnete Stellung des Umschaltventils.

Im dargestellten Beispiel wird mit einem Vorblasdruck P1 von 10 bar und einem Hauptblasdruck P2 von 40 bar gearbeitet. In der Phase des Vorblasens V wird der Vorblasdruck P1 nach dem Öffnen des zweiten Umschaltventils U2 erreicht und bis zum Ende der Vorblaszeit Tv gehalten. Danach wird durch Öffnen des ersten Umschaltventils U1 die Hauptblasphase mit einem Arbeitsdruck P2 von ca. 40 bar gestartet und bis zum Ende der Hauptblaszeit Th gehalten. Vor dem Ende dieser Hauptblasphase H wird das dritte Umschaltventil U3 geöffnet, um die Verbindung zu REC vorzubereiten. Am Ende der Hauptblasphase wird das zweite Umschaltventil U2 wieder geschlossen, was zu einem Druckabbau im Blaszylinder 100 über das Druckrückführungssystem REC führt. In dieser Sparphase S wird auch das erste Umschaltventil U1 vorbereitend wieder geschlossen. Nach Ablauf der Rekuperationszeit Tr wird auch das dritte Umschaltventil U3 wieder geschlossen, womit in der Entlüftungsphase E der Druck im Blaszylinder 100 und damit auch im Hohlkörper schnell auf Umgebungsdruck abfällt und dieser damit entlüftet ist. Dabei wird aber nur noch die verbliebene Restluftmenge an die Umgebung abgegeben.

Ein grosser Vorteil bei dieser Anordnung liegt darin, dass durch die Andordnung von drei Umschalt- oder Weichenventilen U1, U2 resp. U3 alle Ventilfunktionen einfach und mit kurzen Verbindungswegen realisiert werden können, womit schädlicher Totraum durch zusätzliche Ventile oder Leitungen vermieden wird, zumal in der Regel auf den Einsatz von Rückschlagventilen verzichtet werden kann. Damit kann angesichts der hohen Druckwerte und der in der Regel hohen Produktionsvolumen vorteilhaft eine nicht unbeträchtliche Einsparung von Druckluft erzielt werden.

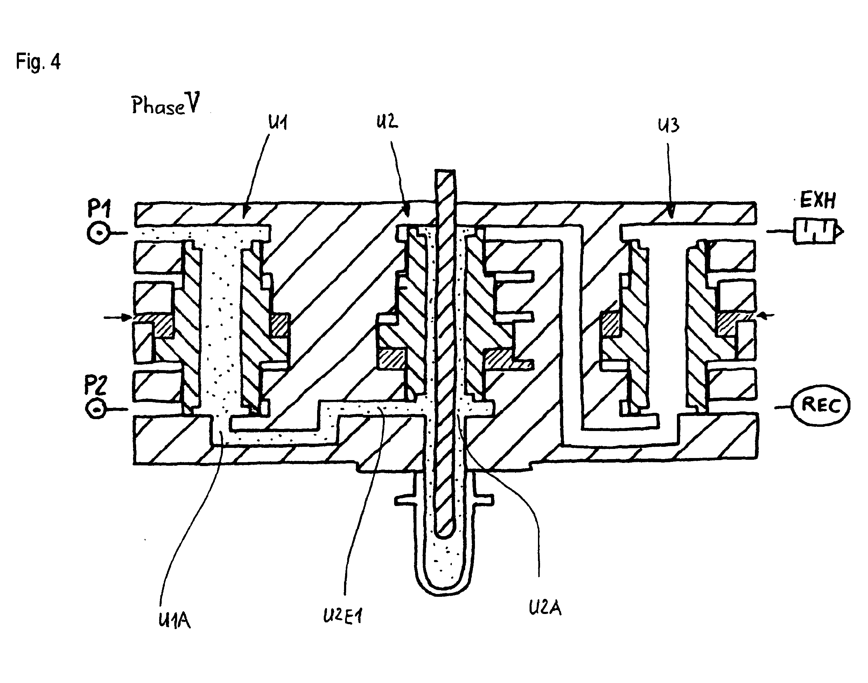

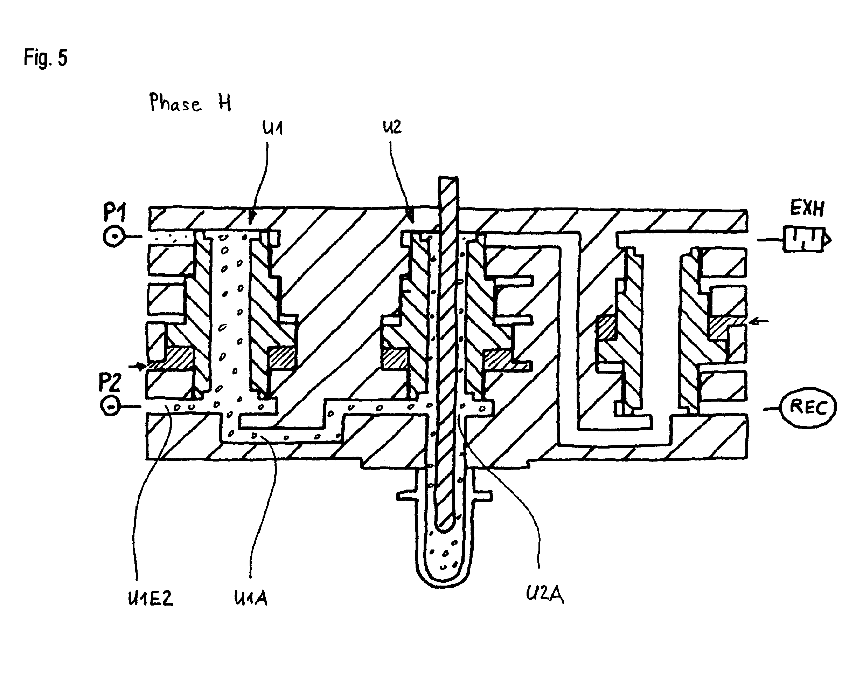

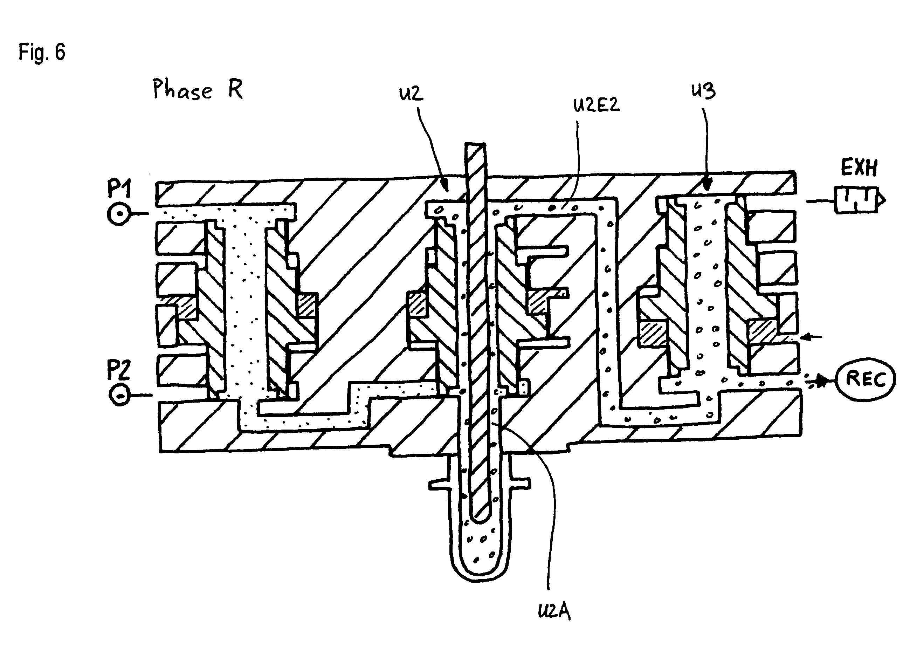

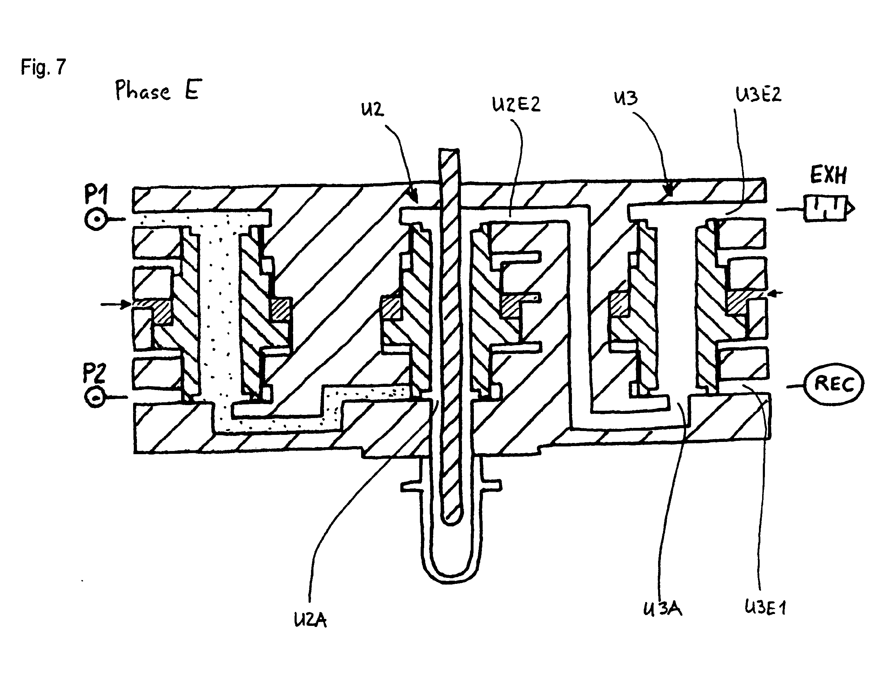

Die Figuren 4 bis 7 zeigen noch schematisch die entsprechenden Kolbenstellungen der drei Ventile U1, U2 und U3 in den verschiedenen Prozessphasen V, H, S und E.

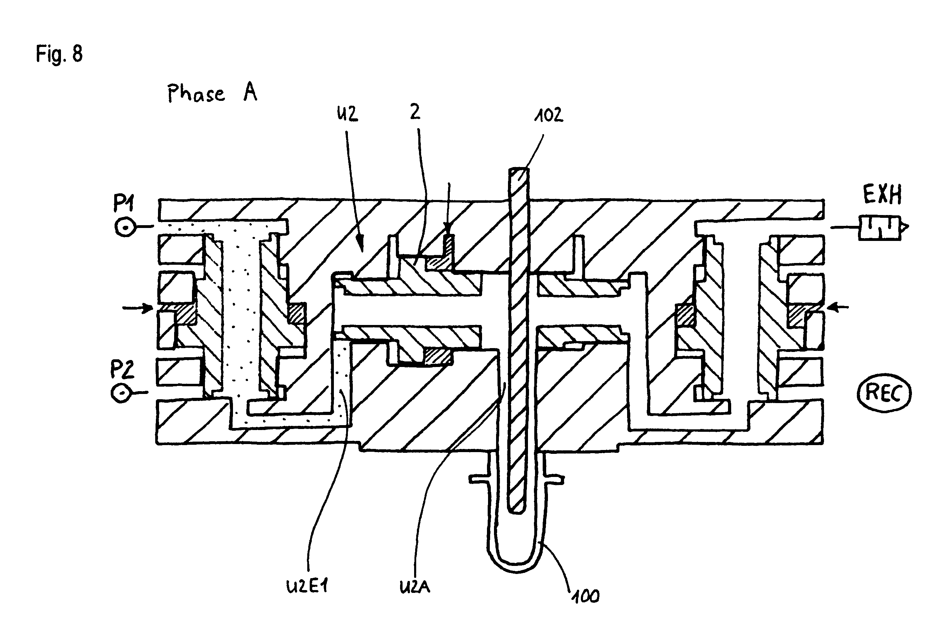

Figur 8 zeigt schematisch im Längsschnitt eine alternative Ausführungsform einer erfindungsgemässen Ventileinrichtung. Der Unterschied zur Ausführungsform nach Figur 1 liegt in einer unterschiedlichen Anordnung des Ausgangs U2A des zweiten Umschaltventils U2, die beiden anderen Umschaltventile U1 und U3 sind identisch angeordnet und ausgelegt wie in Figur 1 dargestellt und beschrieben.

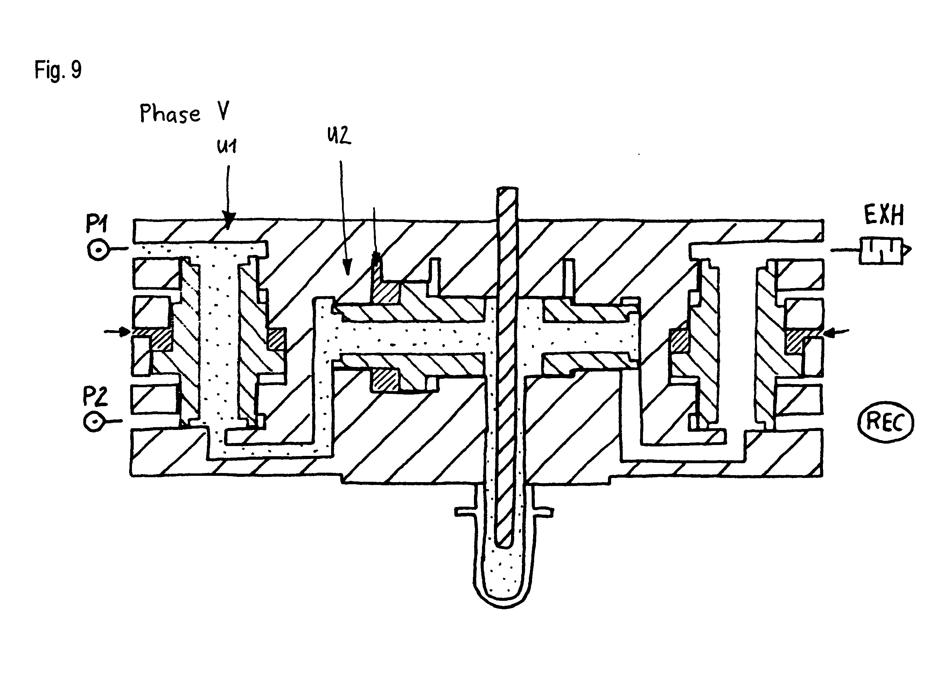

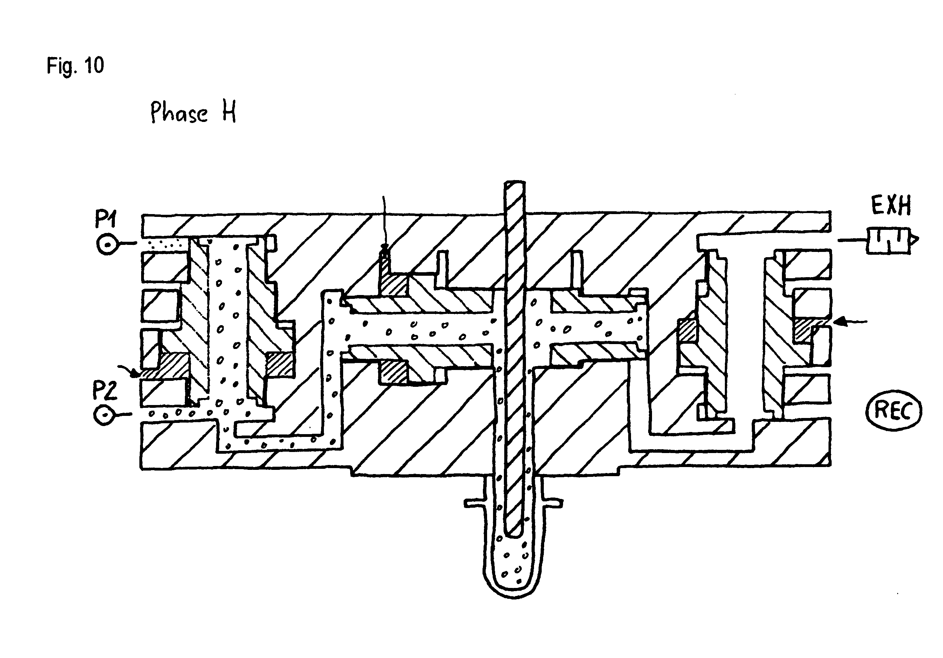

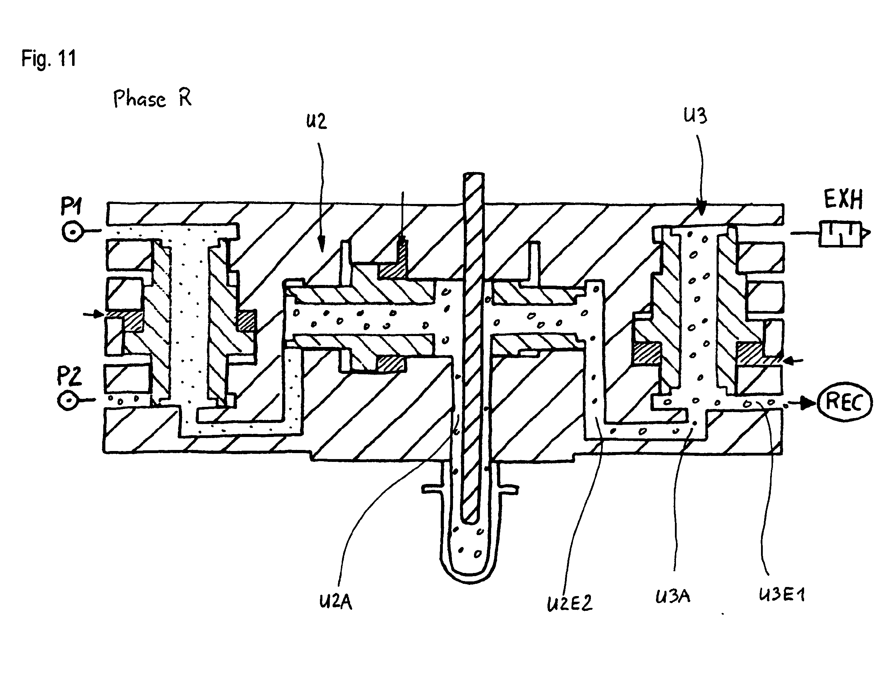

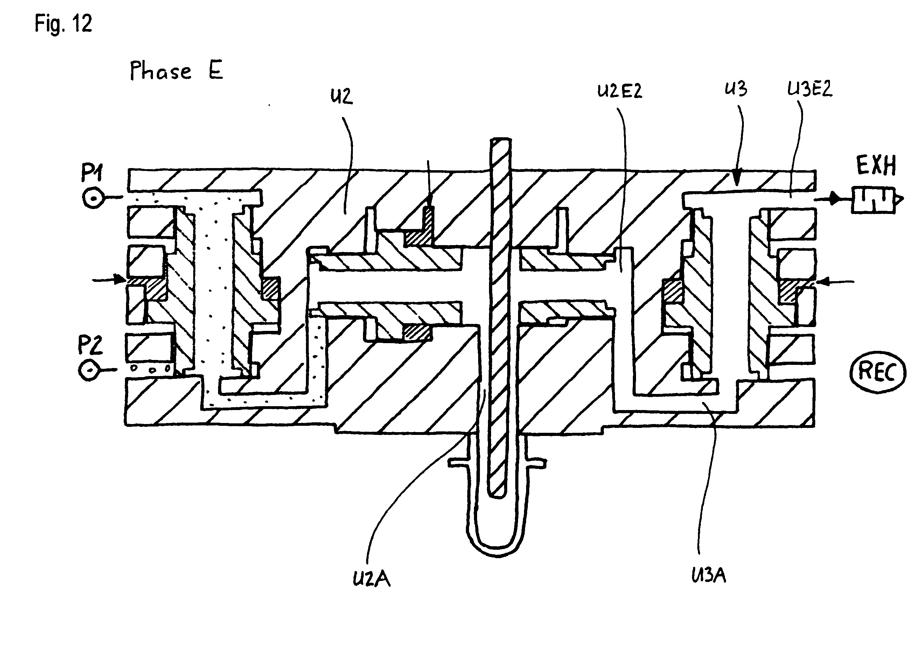

In der Anordnung nach Figur 8 ist der Ausgang U2A im mittleren Bereich des Umschaltventils U2 angeordnet und führt radial von der Kolbenachse weg zum Blaszylinder 100 hin. Ebenfalls ist die Reckstange 102 koaxial zum Ausgang U2A angeordnet und damit praktisch rechtwinklig zur Kolbenachse des Umschaltventils U2 ausgerichtet. Damit durchdringt die Reckstange 102 den Kolbenraum des Umschaltventils U2 rechtwinklig und nicht koaxial. Hierfür weist der Kolben des Umschaltventils U2 zwei radial gegenüberliegende Schlitze resp. Ausnehmungen auf, durch welche hindurch die Reckstange 102 geführt ist und durch welche der Druck aus dem Hohlraum des Kolbens in den Ausgang U2A einströmen kann. Grundsätzlich bleibt sich auch hier die Ventilfunktion des Umschaltventils U2 identisch zur bereits vorgängig beschriebenen Funktion anhand der Figur 1. Auch hier zeigen die Figuren 9 bis 12 die jeweiligen Stellungen der Kolben der Umschaltventile U1, U2 und U3 in den Prozessphasen V, H, R und S.

## Patentansprüche

1. Ventileinrichtung für Hohlkörperblasmaschinen zum Einblasen von Druckluft in ein Blasvolumen eines Vorformlings, mit einer ersten Druckspeisung (P1) und einer zweiten Druckspeisung (P2), wobei die erste Druckspeisung (P1) ein tieferes Druckniveau aufweist als die zweite Druckspeisung (P2), und mit über Ventile absperrbare Zuund Ableitungen zum Blasvolumen, wobei die Ventileinrichtung drei Umschaltventile (U1, U2, U3) aufweist, ein erstes Umschaltventil (U1) mit zwei Eingängen (U1E1, U1E2) und einem Ausgang (U1A) aufweist, wobei der erste Eingang (U1E1) mit der ersten Druckspeisung (P1) und der zweite Eingang (U1E2) mit der zweiten Druckspeisung (P2) verbunden ist und der Ausgang (U1A) mit einem ersten Eingang (U2E1) des zweiten Umschaltventils (U2) verbunden ist, dessen Ausgang (U2A) mit dem Blasvolumen in Verbindung steht, **dadurch gehennzeichnet, dass** ein zweiter Eingang (U2E2) des zweiten Umschaltventils (U2) mit dem Ausgang (U3A) eines dritten Umschaltventils (U3) in Verbindung steht, dessen erster Eingang (U3E1) mit der Umgebung (EXH) und dessen zweiter Eingang (U3E2) mit einem Druckrückführungssystem (REC) verbunden ist, wobei die Umschaltventile (U1, U2, U3) einen als Hohlkörper ausgebildeten Ventilkolben (2) aufweisen, dessen Hohlraum (3) permanent offen mit dem Ausgang (30; U1A, U2A, U3A) des jeweiligen Umschaltventils (U1, U2, U3) verbunden ist.

2. Ventileinrichtung nach Anspruch 1, **dadurch gekennzeichnet, dass** der Ventilkolben (2) der Umschaltventile (U1, U2, U3) als im jeweiligen Ventilkörper (1) längsverschiebbarer zylindrischer Kolben ausgebildet ist, welcher einen radial nach Aussen abragenden, zwischen den beiden Stirnflächen (4,5) des Kolbens (2) angeordneten Kolbenring (9) aufweist, dessen beide Stirnflächen (23,24) in einer ersten Steuerkammer (11) und einer zweiten Steuerkammer (12) liegen.

3. Ventileinrichtung nach Anspruch 2, **dadurch gekennzeichnet, dass** eine erste Wirkfläche (23) des Kolbenringes (9) in der ersten Steuerkammer (11) kleiner ist als eine zweite Wirkfläche (24) des Kolbenringes (9) in der zweiten Steuerkammer (12).

4. Ventileinrichtung nach Anspruch 3, **dadurch gekennzeichnet, dass** die erste Steuerkammer (11) über eine erste Steuerdruckleitung mit einem Steuerdruckreservoir (21) in Verbindung steht und die zweite Steuerkammer (12) über ein Steuerventil (22) schaltbar entweder mit der Umgebung oder mit dem Steuerdruckreservoir (21) in Verbindung steht.

5. Ventileinrichtung nach einem der Ansprüche 2 bis 4, **dadurch gekennzeichnet, dass** an beiden Stirnseiten (4,5) der Kolben (2) jeweils eine ringförmige axial ausgerichtete Ventildichtung (13) angeordnet ist, deren Stirnfläche (14) die jeweilige Schliessfläche des Kolbens (2) bildet und in geschlossenem Zustand des Kolbens (2) gegen eine Sitzfläche (15) des entsprechenden Ventilraumes (5;6) in Anschlag steht und dass weiter in geschlossenem Zustand eine gegen die Schliessrichtung wirkende Wirkfläche (16) gebildet ist, wobei die geometrischen Abmessungen der beiden Ventildichtungen (13) identisch sind.

6. Ventileinrichtung nach Anspruch 5, **dadurch gekennzeichnet, dass** die Ventildichtungen (13) des Kolbens (2) als Schliesskante einen runden Flansch mit im wesentlicher gerader Schliessfläche (14) aufweisen, wobei die Schliessfläche (14) vorzugsweise senkrecht zur Schliessrichtung des Kolbens (2) ausgerichtet ist.

7. Ventileinrichtung nach Anspruch 6, **dadurch gekennzeichnet, dass** die Aussenfläche des Flansches zur Schliessfläche (14) hin radial nach innen angeschrägt ausgeführt ist.

8. Ventileinrichtung nach einem der Ansprüche 2 bis 8, **dadurch gekennzeichnet, dass** der Kolben (2) und die Ventildichtung (13) zweiteilig aus unterschiedlichen Materialien ausgebildet sind, wobei die Ventildichtung (13) vorzugsweise aus Kunststoff besteht.

9. Ventileinrichtung nach einem der Ansprüche 1 bis 8, **dadurch gekennzeichnet, dass** beide Eingänge (U1E1, U1E2) des ersten Umschaltventils (U1) direkt ohne Rückschlagventil mit ersten resp. der zweiten Druckspeisung (P1, P2) verbunden sind.

10. Ventileinrichtung nach einem der Ansprüche 1 bis 9, **dadurch gekennzeichnet, dass** durch den Kolben (2) des zweiten Umschaltventils (U2) hindurch eine Reckstange (102) der Hohlkörperblasmaschine, koaxial oder annähernd senkrecht zur Längsachse des Kolbens (2) verlaufend und den Hohlraum (3) des Kolbens (2) durchdringend, angeordnet ist.

11. Verfahren zum Einblasen von Druckluft in ein Blasvolumen eines Vorformlings unter Verwendung von Druckluft, welche in zwei unterschiedlichen Druckniveaus (P1;P2) bereitgestellt wird, wobei das Blasvolumen zuerst mit dem ersten, tieferen Druckniveau (P1) und danach mit dem zweiten, höheren Druckniveau (P2) gesteuert über Ventile beaufschlagt wird und nach abgeschlossenem Blasvorgang der im Blasvolumen befindliche Druck gesteuert über ein Entlüftungsventil in die Umgebung abgeführt wird, wobei
- die Zufuhr der Druckluft der beiden unterschiedlichen Druckniveaus (P1, P2) über ein erstes Umschaltventil (U1) gesteuert wird;
- die Druckluftzufuhr zum Blasvolumen und Abführung nach abgeschlossenem Blasvorgang aus dem Blasvolumen über ein zweites Umschaltventil (U2) gesteuert wird **dadurch gekennzeichnet, dass**
- die vom zweiten Umschaltventil (U2) abgeführte verbrauchte Luft über ein drittes Umschaltventil (U3) gesteuert an die Umgebung (EXH) oder in ein Druckrückführungssystem (REC) zugeführt wird, wobei
- vor Beginn des Blasvorganges die Ventileinrichtung entlüftet (E) geschaltet wird, wobei das zweite Umschaltventil (U2) und das dritte Umschaltventil (U3) verbunden und das dritte Umschaltventil (U3) mit der Umgebung (EXH) sowie das erste Umschaltventil (U1) mit dem tieferen Druckniveau (P1) verbunden ist;
- für den Start des Blasvorganges (V) das zweite Umschaltventil (U2) mit dem ersten Umschaltventil (U1) verbindend geschaltet wird;
- nach Ablauf einer vordefinierten resp. eingestellten Vorblaszeit (Tv) das erste Umschaltventil (U1) mit dem höheren Druckniveau (P2) verbindend umgeschaltet wird;
- nach Ablauf einer vordefinierten resp. eingestellten Hauptblaszeit (Th) das zweite Umschaltventil (U2) mit dem dritten Umschaltventil (U3) verbindend umgeschaltet wird (R) und danach das erste Umschaltventil (U1) mit dem tieferen Druckniveau (P1) verbinden zurückgeschaltet wird;
- nach Ablauf einer vordefinierten resp. eingestellten Rekuperationszeit (Tr) das dritte Umschaltventil (U3) mit der Umgebung (EXH) verbindend geschaltet wird, womit die Ventileinrichtung entlüftet (E) geschaltet ist.

12. Verfahren nach Anspruch 11, **dadurch gekennzeichnet, dass** das erste Druckniveau (P1) auf einen Druck zwischen 4 bis 20 bar eingestellt resp. geregelt wird.

13. Verfahren nach Anspruch 11 oder 12, **dadurch gekennzeichnet, dass** das zweite Druckniveau (P2) auf einen Druck zwischen 15 bis 40 bar eingestellt resp. geregelt wird.

14. Verfahren nach einem der Ansprüche 11 bis 13, **dadurch gekennzeichnet, dass** die Rekuperationszeit durch Messung des Druckes im Blasvolumen und Erreichen resp. Unterschreiten eines bestimmten Druckwertes dynamisch bestimmt wird.

## Claims

1. A valve device for hollow body blowing machines for blowing compressed air into a blowing volume of a pre-form, with a first pressure feed (P1) and a second pressure feed (P2), wherein the first pressure feed (P1) has a lower pressure level than the second pressure feed (P2), and with supply lines and discharge lines to the blowing volume, said lines being capable of being shut off by means of valves, wherein the valve device comprises three switch-over valves (U1, U2, U3), a first switch-over valve (U1) with two inlets (U1E1,U1E2) and an outlet (U1A), wherein the first inlet (U1E1) is connected to the first pressure feed (P1) and the second inlet (U1E2) is connected to the second pressure feed (P2) and the outlet (U1A) is connected to a first inlet (U2E1) of the second switch-over valve (U2), the outlet (U2A) whereof is connected to the blowing volume, **characterised in that** a second inlet (U2E2) of the second switch-over valve (U2) is connected to the outlet (U3A) of a third switch-over valve (U3), the first inlet (U3E1) whereof is connected to the exterior (EXH) and the second inlet (U3E2) whereof is connected to a pressure feedback system (REC), wherein the switch-over valves (U1, U2, U3) comprise a valve piston (2) constituted as a hollow body, the hollow space (3) whereof is connected permanently open to the outlet (30; U1A, U2A, U3A) of the respective switch-over valve (U1, U2, U3).

2. The valve device according to claim 1, **characterised in that** the valve piston (2) of the switch-over valves (U1, U2, U3) is constituted as a cylindrical piston longitudinally displaceable in the respective valve body (1), said cylindrical piston comprising a piston ring (9) projecting radially outwards and being disposed between the two end faces (4, 5) of the piston (2), the two end faces (23, 24) of said piston ring lying in a first control chamber (11) and a second control chamber (12).

3. The valve device according to claim 2, **characterised in that** a first active area (23) of the piston ring (9) in the first control chamber (11) is smaller than a second active area (24) of the piston ring (9) in the second control chamber (12).

4. The valve device according to claim 3, **characterised in that** the first control chamber (11) is connected via a first control pressure line to a control pressure reservoir (21) and the second control chamber (12) is connected via a control valve (22) in a manner capable of being switched either to the exterior or to the control pressure reservoir (21).

5. The valve device according to any one of claims 2 to 4, **characterised in that** an annular axially orientated valve seal (13) is disposed in each case at the two end faces (4, 5) of the piston (2), the front face (14) of which valve seal forms the respective closure surface of the piston (2) and, in the closed state of the piston (2), abuts against a sealing surface (15) of the respective valve space (5; 6) and that, also in the closed state, an active area (16) acting against the closing direction is formed, wherein the geometrical dimensions of the two valve seals (13) are identical.

6. The valve device according to claim 5, **characterised in that** the valve seals (13) of the piston (2), as the closing edge, comprise a round flange with an essentially straight closing surface area (14), wherein the closing surface area (14) is preferably orientated at right angles to the closing direction of the piston (2).

7. The valve device according to claim 6, **characterised in that** the outer face of the flange is constituted bevelled radially inwards towards the closing surface area (14).

8. The valve device according to any one of claims 2 to 8, **characterised in that** the piston (2) and the valve seal (13) are constituted in two parts of different materials, wherein the valve seal (13) is preferably made of plastic.

9. The valve device according to any one of claims 1 to 8, **characterised in that** the two inlets (U1E1, U1E2) of the first switch-over valve (U1) are connected directly, without a non-return valve, to the first and respectively the second pressure feed (P1, P2).

10. The valve device according to any one of claims 1 to 9, **characterised in that**, through the piston (2) of the second switch-over valve (U2), a stretching rod (102) of the hollow body blowing machine is arranged running coaxially or approximately normal to the longitudinal axis of the piston (2) and penetrating the hollow space (3) of the piston (2).

11. A method for blowing compressed air into a blowing volume of a pre-form using compressed air, which is made available at two different pressure levels (P1; P2), wherein the blowing volume is pressurised first with the first, lower pressure level (P1) and then with the second, higher pressure level (P2) controlled by means of valves and, after the completed blowing process, the pressure present in the blowing volume is discharged to the exterior controlled by means of a vent valve, wherein
- the supply of compressed air of the two different pressure levels (P1, P2) is controlled by means of a first switch-over valve (U1) ;
- the compressed air supply to the blowing volume and discharge after the completed blowing process from the blowing volume is controlled by means of a second switch-over valve (U2), **characterised in that**
- the used air discharged by the second switch-over valve (U2) is fed, controlled by a third switch-over valve (U3), to the exterior (EXH) or into a pressure feedback system (REC), wherein
- the valve device is switched deaerated (E) before the start of the blowing process, wherein the second switch-over valve (U2) and the third switch-over valve (U3) are connected and the third switch-over valve (U3) is connected to the exterior (EXH) and the first switch-over valve (U1) is connected to the lower pressure level (P1);
- for the start of the blowing process (V), the second switch-over valve (U2) is switched connecting to the first switch-over valve (U1);
- after the lapse of a pre-defined or adjusted pre-blowing time (Tv), the first switch-over valve (U1) is switched over connecting to the higher pressure level (P2);
- after the lapse of a pre-defined or adjusted main blowing time (Th), the second switch-over valve (U2) is switched over connecting to the third switch-over valve (U3) (R) and thereafter the first switch-over valve (U1) is switched back connecting to the lower pressure level (P1);
- after the lapse of a pre-defined or adjusted recuperation time (Tr), the third switch-over valve (U3) is switched connecting to the exterior (EXH), as a result of which the valve device is switched deaerated (E).

12. The method according to claim 11, **characterised in that** the first pressure level (P1) is adjusted or regulated to a pressure between 4 to 20 bar.

13. The method according to claim 11 or 12, **characterised in that** the second pressure level (P2) is adjusted or regulated to a pressure between 15 to 40 bar.

14. The method according to any one of claims 11 to 13, **characterised in that** the recuperation time is determined dynamically by measuring the pressure in the blowing volume and by a specific pressure value being reached or exceeded.

## Revendications

1. Dispositif de soupapes pour souffleuses de corps creux, pour insuffler de l'air comprimé dans un volume à souffler d'une ébauche, avec une première alimentation en pression (P1) et une deuxième alimentation en pression (P2), la première alimentation en pression (P1) présentant un niveau de pression inférieur à celui de la deuxième alimentation en pression (P2) et avec des conduits d'alimentation et d'évacuation fermables par des soupapes donnant sur le volume à souffler, le dispositif de soupapes comportant trois soupapes de commutation (U1, U2, U3), une première soupape de commutation (U1) avec deux entrées (U1E1, U1E2) et une sortie (U1A), la première entrée (U1E1) étant reliée à la première alimentation en pression (P1) et la deuxième entrée (U1E2) étant reliée à la deuxième alimentation en pression (P2) et la sortie (U1A) étant reliée à une première entrée de la deuxième soupape de commutation (U2) dont la sortie (U2A) est en liaison avec le volume à souffler, **caractérisé en ce qu'**une première entrée (U2E2) de la deuxième soupape de commutation (U2) est en liaison avec la sortie (U3A) d'une troisième soupape de commutation (U3) dont la première entrée (U3E1) est reliée à l'environnement (EXH) et dont la deuxième entrée (U3E2) est reliée à un système de retour de pression (REC), les soupapes de commutation (U1, U2, U3) comportant un piston de soupape (2) conçu sous la forme d'un corps creux, dont la cavité (3) ouverte en permanence est reliée à la sortie (30 ; U1A, U2A, U3A) de la soupape de commutation (U1, U2, U3) concernée.

2. Dispositif de soupapes selon la revendication 1, **caractérisé en ce que** le piston de soupape (2) des soupapes de commutation (U1, U2, U3) est conçu sous la forme d'un piston cylindrique déplaçable en longueur dans le corps de soupape (1) concerné, lequel comporte un segment de piston (9) saillant vers l'extérieur, disposé entre les deux faces frontales (4, 5) du piston (2), dont les deux faces frontales (23, 24) se situent dans une première chambre de commande (11) et dans une deuxième chambre de commande (12).

3. Dispositif de soupapes selon la revendication 2, **caractérisé en ce qu'**une première surface active (23) du segment de piston (9) dans la première chambre de commande (11) est plus petite qu'une deuxième surface active (24) du segment de piston (9) dans la deuxième chambre de commande (12).

4. Dispositif de soupapes selon la revendication 3, **caractérisé en ce que** la première chambre de commande (11) est en liaison via un premier conduit de commande sous pression avec un réservoir de pression de commande (21) et **en ce que** la deuxième chambre de commande (12) est en liaison inversable via une soupape de commande (22), soit avec l'environnement ou avec le réservoir de pression de commande (21).

5. Dispositif de soupapes selon l'une quelconque des revendications 2 à 4, **caractérisé en ce que** sur chacune des deux faces frontales (4, 5) des pistons (2) est disposé un joint de soupape annulaire (13) orienté en direction axiale, dont la face frontale (14) forme la surface de fermeture respective du piston (2) et qui en position fermée du piston (2) est en butée contre une surface d'appui (15) de la chambre de soupape (5; 6) correspondante et **en ce que** par ailleurs, en position fermée, il est formé une surface active (16) agissant à l'encontre du sens de fermeture, les dimensions géométriques des deux joints de soupape (13) étant identiques.

6. Dispositif de soupapes selon la revendication 5, **caractérisé en ce que** les joints de soupape (13) du piston (2) comportent en tant qu'arête de fermeture une bride ronde avec une surface de fermeture (14) sensiblement rectiligne, la surface de fermeture (14) étant orientée de préférence à la perpendiculaire du sens de fermeture du piston (2).

7. Dispositif de soupapes selon la revendication 6, **caractérisé en ce que** la surface extérieure de la bride est réalisée en inclinaison radiale vers l'intérieur par rapport à la surface de fermeture (14).

8. Dispositif de soupapes selon l'une quelconque des revendications 2 à 8, **caractérisé en ce que** le piston (2) et le joint de soupape (13) sont conçus en deux éléments en différents matériaux, le joint de soupape (13) étant de préférence en matière plastique.

9. Dispositif de soupapes selon l'une quelconque des revendications 1 à 8, **caractérisé en ce que** les deux entrées (U1E1, U1E2) de la première soupape de commutation (U1) sont reliées directement sans clapet antiretour avec la première, respectivement la deuxième alimentation en pression (P1, P2).

10. Dispositif de soupapes selon l'une quelconque des revendications 1 à 9, **caractérisé en ce qu'**à travers le piston (2) de la deuxième soupape de commutation (U2) une barre d'étirage (102) de la souffleuse de corps creux est disposée en s'étendant de façon coaxiale ou approximativement à la perpendiculaire de l'axe longitudinal du piston (2) et en traversant la cavité (3) du piston (2) .

11. Dispositif d'insufflation d'air comprimé dans un volume de soufflage d'une ébauche en utilisant de l'air comprimé (P1 ; P2), lequel est mis à disposition avec deux niveaux de pression, le volume de soufflage, étant soumis de façon contrôlée par une soupape d'abord au premier niveau de pression inférieur (P1) et ensuite au deuxième niveau de pression supérieur (P2) et après achèvement du processus de soufflage, la pression située dans le volume de soufflage étant évacuée de façon contrôlée dans l'environnement, via une soupape de purge,
- l'alimentation d'air comprimé dans les deux différents niveaux (P1, P2) étant commandée via une première soupape de commutation (U1)
- l'alimentation d'air comprimé vers le volume de soufflage et son évacuation hors du volume de soufflage après achèvement du processus de soufflage étant commandées via une deuxième soupape de commutation (U2), **caractérisé en ce que**
- l'air utilisé évacué par la deuxième soupape de commutation (U2) commandé par une troisième soupape de commutation (U3) est évacué vers l'environnement (EXH) ou vers un système de retour de pression (REC) ;
- avant le début du processus de soufflage, le dispositif de soupapes étant commuté en mode purge (E), la deuxième soupape de commutation (U2) et la troisième soupape de commutation (U3) étant reliées et la troisième soupape de commutation (U3) étant reliée à l'environnement (EXH), et la première soupape de commutation (U1) étant reliée au niveau de pression inférieur (P1) ;
- pour le lancement du processus de soufflage (V), la deuxième soupape de commutation (U2) étant commutée en liaison avec la première soupape de commutation (U1) ;
- après écoulement d'un temps de présoufflage prédéfini, voire réglé (Tr) la première soupape de commutation (U1) étant inversée en liaison avec le niveau de pression supérieur (P2) ;
- après écoulement d'un temps de soufflage principal prédéfini, voir réglé (Th), la deuxième soupape de commutation (U2) étant inversée (R) en liaison avec la troisième soupape de commutation (U3) et ensuite la première soupape de commutation (U1) étant réinversée en liaison sur le niveau de pression inférieur (P1) ;
- après écoulement d'un temps de récupération prédéfini, voire réglé (Tr), la troisième soupape de commutation (U3) étant commutée en liaison avec l'environnement (EXH), ce qui a pour effet de commuter le dispositif de soupapes en mode purge (E).

12. Procédé selon la revendication 11, **caractérisé en ce que** le premier niveau de pression (P1) est ajusté ou réglé à une pression comprise entre 4 et 20 bar.

13. Procédé selon la revendication 11, **caractérisé en ce que** le deuxième niveau de pression (P1) est ajusté ou réglé à une pression comprise entre 15 et 40 bar.

14. Procédé selon l'une quelconque des revendications 11 à 13, **caractérisé en ce que** le temps de récupération est déterminé de façon dynamique, par mesure de la pression dans le volume de soufflage et par atteinte d'une certaine valeur de pression ou d'une valeur inférieure à cette dernière.
